# EUROPÄISCHE PATENTANMELDUNG

(11) **EP 1 783 709 A1**
(43) Veröffentlichungstag der Anmeldung: **09.05.2007**
(21) Anmeldenummer: 05021850.2
(22) Anmeldetag: 06.10.2005
(51) Int. Cl.: G07F 19/00

(54) **Anordnung und Verfahren zur Durchführung elektronischer Transaktionen**

(71) Anmelder: First Data Corporation, Greenwood Village, CO 80111 (US)
(72) Erfinder: Albrecht, Norbert, 16341 Panketal (DE); Künemund, Friedhelm, 70184 Stuttgart (DE); Zinke, Gerd, 12683 Berlin (DE)
(74) Vertreter: Beyer, Andreas

(57) **Zusammenfassung**

Bei einer Ausführungsform umfasst eine Anordnung zur Durchführung elektronischer Kartenzahlungstransaktionen erste Kartenlesemittel (10) zum Lesen von Daten von einer Zahlungskarte (12) sowie eine auf die ersten Kartenlesemittel ansprechende erste Prozessmaschine, welche dazu eingerichtet ist, in Antwort auf das Lesen von Kartendaten durch die ersten Kartenlesemittel die Absendung einer elektronischen Autorisierungsanforderung an ein entferntes Transaktionsautorisierungssystem (14, 16) zu bewirken. Außerdem umfasst die Anordnung Speichermittel (18) zum Speichern einer von dem Transaktionsautorisierungssystem in Antwort auf die Autorisierungsanforderung zurückgesendeten elektronischen Autorisierungsantwort. Von den ersten Kartenlesemitteln gesonderte zweite Kartenlesemittel (20-24) dienen zum zweitmaligen Lesen von Daten von der Zahlungskarte (12), wobei eine auf die zweiten Kartenlesemittel ansprechende zweite Prozessmaschine dazu eingerichtet ist, in Antwort auf das zweitmalige Lesen von Kartendaten durch die zweiten Kartenlesemittel die in den Speichermitteln gespeicherte Autorisierungsantwort abzufragen.

## Beschreibung

Die Erfindung befasst sich mit der Durchführung elektronischer Transaktionen. Speziell werden im Rahmen der Erfindung elektronische Transaktionen betrachtet, bei denen von einem Transaktionsberechtigungsmittel eines Transaktionsteilnehmers Kenndaten gelesen werden und unter Verwendung der gelesenen Kenndaten die Transaktion abgewickelt wird.

Ein Beispiel eines Transaktionsberechtigungsmittels sind Zahlungskarten, die vom Karteninhaber zur Bezahlung von Waren oder Dienstleistungen oder/und zum Bargeldbezug eingesetzt werden können. In einem maschinenlesbaren Informationsspeicher der Zahlungskarte sind dabei verschiedene Daten gespeichert, die mittels eines Kartenlesers gelesen werden können. Der Informationsspeicher kann beispielsweise ein Magnetstreifen oder ein eingebetteter Chip sein. Die gespeicherten Daten umfassen beispielsweise Kontodaten (Kontonummer, Bankidentifizierungscode), ein Verfallsdatum der Karte, eine Kartennummer, eine Chipnummer, usw. Häufig verwendete Karten sind sogenannte Debitkarten. Diese ermöglichen Lastschriftzahlungen, das sind Zahlungen, bei denen der Zahlungsbetrag direkt per Lastschrift vom Konto abgebucht wird. Eine Lastschriftzahlung kann vom Karteninhaber beispielsweise durch eigenhändige Unterschrift auf einem Lastschriftbeleg oder durch Eingabe einer persönlichen Identifikationsnummer (PIN) an einem Kartenterminal legitimiert werden. Eine andere Variante einer Zahlungskarte ist beispielsweise die Kreditkarte.

Es versteht sich, dass im Rahmen der Erfindung die physikalische Erscheinungsform des Transaktionsberechtigungsmittels keine Rolle spielt, solange es geeignete Kenndaten enthält, die zur Prüfung der Transaktionsberechtigung oder/und zur Identifizierung des Inhabers des Transaktionsberechtigungsmittels geeignet sind. Das Transaktionsberechtigungsmittel kann sogar zur aktiven Ausgabe der Kenndaten ausgelegt sein. Beispielsweise ist es denkbar, das Transaktionsberechtigungsmittel durch einen sogenannten RF-Chip (*radio frequency chip*) zu realisieren oder mit einem solchen auszustatten, wobei der Chip die nötigen Kenndaten per Funk ausstrahlt, die dann von einem Lesemittel empfangen und verarbeitet werden.

Bei manchen elektronischen Transaktionsverfahren, insbesondere Zahlungstransaktionen, ist es bekannt, eine Online-Autorisierung durchzuführen. So ist beispielsweise eine unterschriftsbasierte Lastschrift-Kartenzahlungsmethode bekannt, bei der ein Kartenterminal zunächst eine elektronische Nachricht mit den gelesenen Kontodaten einer als Zahlungsmittel verwendeten Debitkarte an eine Autorisierungszentrale zur Prüfung der Karte schickt, bevor es eine Zahlungstransaktion mit der Karte freigibt. Auch bei PIN-basierten Lastschrift-Kartenzahlungen findet eine solche Autorisierung statt, dort sogar durch eine vom herausgebenden Institut der Karte betriebene Autorisierungszentrale, die Zugriff auf das Kartenkonto hat, sodass auch die Bonität und das verfügbare Guthaben des Karteninhabers von der Autorisierungszentrale geprüft werden können. In jedem Fall sendet die angerufene Autorisierungszentrale eine elektronische Nachricht zurück, die Informationen darüber enthält, ob die Karte akzeptiert ist und ggf. ob die gewünschte Transaktion zugelassen ist. Der Signalverkehr bei der Online-Autorisierung wird beispielsweise über ein öffentliches Fernsprechnetz, das Internet oder ein anderes Datenkommunikationsnetz abgewickelt.

Angesichts der Erwartung von zahlenden Kunden und auch von Kassenpersonal, dass es durch die Online-Autorisierung zu keiner wesentlichen Verzögerung von Bezahlvorgängen kommt, ist ohne weiteres einsichtlich, dass es sich bei der Online-Autorisierung um einen ausgesprochen zeitkritischen Vorgang handelt. Der im Rahmen einer Online-Autorisierung auftretende Signalverkehr und die Autorisierungsprüfung selbst müssen mit entsprechender Zeitkritikalität bewältigt werden. Der erforderliche Aufwand bei Protokollen und Ressourcen für die Signalübermittlung und Datenverarbeitung ist entsprechend hoch, insbesondere wenn man bedenkt, dass in einem großflächig vernetzten Zahlungstransaktionssystem nahezu gleichzeitig eine große Vielzahl von Online-Autorisierungen von verschiedenen Bezahlterminals angefordert werden können.

Aufgabe der Erfindung ist es daher, einen Weg aufzuzeigen, wie bei der Abwicklung von Transaktionen, die eine Autorisierung erfordern, zeitkritischer Signalverkehr und zeitkritische Prüfprozesse und der damit verbundene hohe Aufwand bei der Datenkommunikation und -verarbeitung verringert werden können.

Nach einem Vorrichtungsgesichtspunkt schlägt die Erfindung zur Lösung dieser Aufgabe eine Anordnung zur Durchführung elektronischer Transaktionen vor, umfassend
- erste Lesemittel zum Lesen einer oder mehrerer Kenninformationen von einem Kenninformationsträgerobjekt,
- eine auf die ersten Lesemittel ansprechende erste Prozessmaschine, welche dazu eingerichtet ist, in Antwort auf das Lesen mindestens einer Kenninformation seitens der ersten Lesemittel die Absendung einer elektronischen Autorisierungsanforderung an ein entferntes Transaktionsautorisierungssystem zu bewirken,
- Speichermittel zum Speichern einer von dem Transaktionsautorisierungssystem in Antwort auf die Autorisierungsanforderung zurückgesendeten elektronischen Autorisierungsantwort,
- von den ersten Lesemitteln gesonderte zweite Lesemittel zum Lesen von Kenndaten von einem Transaktionsberechtigungsmittel sowie
- eine auf die zweiten Lesemittel ansprechende zweite Prozessmaschine, welche dazu eingerichtet ist, in Antwort auf das Lesen von Kenndaten seitens der zweiten Lesemittel eine Abfrage einer in den Speichermitteln gespeicherten Autorisierungsantwort zu bewirken.

Nach einem Verfahrensaspekt wird obige Aufgabe erfindungsgemäß durch ein Verfahren zur Durchführung elektronischer Kartenzahlungstransaktionen gelöst, umfassend die Schritte:
- Durchführen eines ersten Lesevorgangs, bei dem eine oder mehrere Kenninformationen von einem Kenninformationsträgerobjekt gelesen werden,
- Absenden einer elektronischen Autorisierungsanforderung an ein entferntes Autorisierungssystem in Antwort auf den ersten Lesevorgang,
- Speichern einer von dem Autorisierungssystem in Antwort auf die Autorisierungsanforderung zurückgesendeten elektronischen Autorisierungsantwort,
- Durchführen eines zweiten Lesevorgangs, bei dem Kenndaten von einem Transaktionsberechtigungsmittel gelesen werden, sowie
- in Antwort auf den zweiten Lesevorgang Bewirken einer Abfrage einer in den Speichermitteln gespeicherten Autorisierungsantwort.

Bei der Erfindung erfolgt ein zweimaliger, zeitlich getrennter Lesevorgang, wobei der erste Lesevorgang Auslöser für die Absendung einer Autorisierungsanforderung ist, während der zweite Lesevorgang Auslöser für die Abfrage eines Speichers nach einer Autorisierungsantwort von dem angerufenen Autorisierungssystem ist. Dieses Prinzip des zweimaligen Lesens kann dazu genutzt werden, die Prozeduren im Rahmen der Abwicklung einer Transaktion, insbesondere einer Zahlungstransaktion, in zwei zeitlich voneinander entkoppelte Teilprozeduren zu unterteilen, nämlich eine, die den Autorisierungsprozess umfasst, und eine andere, die zunächst einen Speicherzugriff und - sofern in den Speichermitteln eine positive Autorisierungsantwort abgelegt ist
- alle noch verbleibenden Terminalprozesse im Rahmen der Transaktionsabwicklung umfasst. Hierdurch kann die Zeitkritikalität des Autorisierungsprozesses gemildert oder ggf. sogar weitestgehend aufgehoben werden, so dass die Anforderungen an die für die Durchführung des Autorisierungsprozesses verwendete Soft- und Hardware erheblich reduziert werden können.

Die erste und zweite Prozessmaschine sind von geeigneter Soft- oder/und Hardware gebildete Maschinen, die zur Ausführung eines oder mehrerer Prozesse bestimmt und ausgebildet sind. Sie sind insbesondere in einem oder mehreren Terminalgeräten eines Transaktionssystems implementiert. Die ersten Lesemittel und die zweiten Lesemittel können zweckmäßigerweise von gesonderten, räumlich getrennt aufgestellten Lesegeräten gebildet sein. Es ist allerdings auch denkbar, die beiden Lesevorgänge mit denselben Lesemitteln durchzuführen. Bei dem zu lesenden Kenninformationsträgerobjekt kann es sich um das Transaktionsberechtigungsmittel selbst handeln. In diesem Fall kann mindestens eine im Rahmen des ersten Lesevorgangs gelesene Kenninformation identisch mit den im Rahmen des zweiten Lesevorgangs gelesenen Kenndaten sein oder identisch in diesen enthalten sein. Es ist freilich auch vorstellbar, dass das Kenninformationsträgerobjekt von dem Transaktionsberechtigungsmittel verschieden ist. So ist es denkbar, dass als Kenninformation im Rahmen des ersten Lesevorgangs eine biometrische Information einer an der Transaktion teilnehmenden Person gelesen wird, so dass in diesem Fall das Kenninformationsträgerobjekt ein Körperteil dieser Person ist. Es ist auch denkbar, ein Ausweisdokument als Kenninformationsträgerobjekt zu nutzen und eine oder mehrere Kenninformationen von einem solchen Ausweisdokument zu lesen.

Die Speichermittel können einem Server zugeordnet sein, welcher über ein lokales Netzwerk mit einem oder mehreren Terminalgeräten, beispielsweise Kartenterminals, gekoppelt ist, von denen zumindest ein Teil jeweils eine zweite Prozessmaschine bildet. Dieser lokale Server kann von der zweiten Prozessmaschine angerufen werden, um die Autorisierungsantwort abzufragen. Es ist ebenso denkbar, die Speichermittel direkt in einem Terminalgerät vorzusehen.

In jedem Fall ist es zweckmäßig, wenn diejenige Netzwerkkomponente, welche die Autorisierungsanforderung absendet, eine gleiche Netzwerkadresse wie diejenige Netzwerkkomponente besitzt, an welche das Autorisierungssystem die Autorisierungsantwort übermittelt. Das Autorisierungssystem muss dann nicht eine gesonderte Kommunikationsverbindung zu der empfangenden Komponente aufbauen. Kartenterminals beispielsweise haben üblicherweise einen eindeutigen Terminalidentifikationscode zugeordnet, den sie in Nachrichten an andere Netzwerkkomponenten mitsenden, um sich so zu identifizieren.

Haben die sendende und die empfangende Netzwerkkomponente unterschiedliche Adressen in dem Netzwerk, über das sie mit dem Autorisierungssystem gekoppelt sind, ist es vorstellbar, dass die sendende Komponente die Adresse der als Empfänger der Autorisierungsantwort vorgesehenen Komponente in die Autorisierungsanforderung einfügt. Möglich ist auch, dass im Autorisierungssystem eine Liste oder dergleichen abgelegt ist, in der für verschiedene Adressen von sendenden Komponenten jeweils eine oder mehrere Adressen von empfangenden Komponenten angegeben sind. In diesem Fall muss eine sendende Komponente keine Adressinformation über den gewünschten Empfänger der Autorisierungsantwort mitsenden.

Bei einer praktischen Umsetzung der Erfindung können die ersten Lesemittel beispielsweise im Eingangsbereich eines Ladengeschäfts angeordnet sein. Ein Kunde, der das Ladengeschäft betritt und mit einer Zahlungskarte wie beispielsweise einer Debitkarte bezahlen möchte, kann die Karte in einen Leseschlitz der ersten Lesemittel einführen. Die Überprüfung der Karte kann so erfolgen, während der Kunde Waren auswählt. Die zweiten Lesemittel sind im Kassenbereich des Ladengeschäfts angeordnet. Zum Bezahlen kann die Karte vom Kunden oder vom Kassenpersonal in einen Leseschlitz der zweiten Lesemittel eingeführt werden. Es muss dann nur die Autorisierungsantwort abgerufen werden, jedoch keine Online-Verbindung zum Autorisierungssystem mehr aufgebaut werden. Statt eines Transaktionsberechtigungsmittels, das wie herkömmliche Zahlungskarten aktiv vom Kunden präsentiert werden muss, kann als Transaktionsberechtigungsmittel beispielsweise eines mit einem eingebauten funkkommunikationsfähigen Chip verwendet werden, mittels dessen ohne aktive Beteiligung des Kunden alle Lesevorgänge automatisch abgewickelt werden können.

Die Autorisierungsanforderung und die Autorisierungsantwort sind Nachrichten, die nach einem vorbestimmten Protokoll, beispielsweise einem Paketprotokoll, über ein Netzwerk übermittelt werden. Die Nachrichtenübertragung im Netzwerk kann drahtlos oder/und drahtgebunden erfolgen.

Die Erfindung erstreckt sich ferner auf ein Informationsspeichermedium mit darauf oder darin gespeicherten Programmcodemitteln, wobei die Programmcodemittel bei ihrer Ausführung durch eine prozessorbasierte Rechneranordnung die Durchführung des Verfahrens der vorstehend beschriebenen Art bewirken. Gleichfalls umfasst die Erfindung ein elektrisches oder elektromagnetisches Signal, welches Programmcodemittel repräsentiert, die bei ihrer Ausführung durch eine prozessorbasierte Rechneranordnung die Durchführung des Verfahrens der vorstehend beschriebenen Art bewirken.

Die Erfindung wir nachfolgend anhand der beigefügten einzigen schematischen Zeichnung weiter erläutert. Diese zeigt ein Blockschaltbild einer Architektur eines elektronischen Bezahlsystems gemäß einer beispielhaften Ausführungsform.

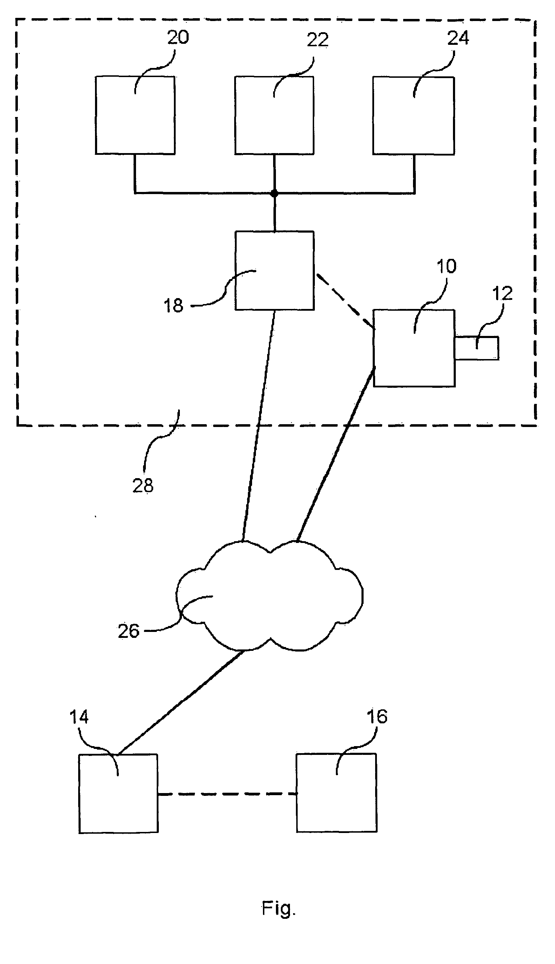

In der Zeichnung ist ein Lesegerät 10 erkennbar, das ein erstes Lesemittel im Sinne der Erfindung darstellt. Das Lesegerät 10 kann beispielsweise im Eingangsbereich eines gestrichelt umrissenen Ladengeschäfts 28 angeordnet sein. Ein Kunde, der das Geschäft 28 betritt, kann eine Zahlungskarte 12 in einen Leseschlitz des Lesegeräts 10 einführen, bevor er mit dem Einkaufen beginnt. Es ist auch denkbar, dass das Lesegerät 10 auf drahtlose Weise Daten von der Karte lesen kann, so dass ein Einstecken der Karte in einen Leseschlitz des Lesegeräts 10 möglicherweise entfallen kann.

Das Lesegerät 10 liest verschiedene Daten von der Zahlungskarte 12, insbesondere Kontodaten. Es ist so programmiert und ausgestaltet, dass es mit den gelesenen Daten eine Autorisierungsanforderungsnachricht erzeugen kann und diese über ein Kommunikationsnetz 26 an einen vorbestimmten Host 14 übermitteln kann. Somit implementiert das Lesegerät 10 eine erste Prozessmaschine im Sinne der Erfindung. Das Kommunikationsnetz 26 kann insbesondere ein öffentliches Kommunikationsnetz umfassen, beispielsweise das Internet oder ein leitungs- oder paketvermitteltes Fernsprechnetz. Der Host 14 leitet die Autorisierungsanforderungsnachricht an eine Autorisierungsmaschine 16 weiter. Die Autorisierungsmaschine 16 prüft die erhaltenen Daten beispielsweise gegen eine gespeicherte Liste von gesperrten oder zugelassenen Zahlungskarten.

Nach Abschluss der Überprüfung erstellt die Autorisierungsmaschine 16 eine Autorisierungsantwortnachricht, die über den Host 14 an einen Zahlungsfreigabeserver 18 übermittelt und von diesem gespeichert wird. Der Zahlungsfreigabeserver 18 bildet Speichermittel im Sinne der Erfindung. Er ist in einem lokalen Netzwerk mit (im vorliegenden Beispielfall) mehreren Kassenterminals 20, 22, 24 verbunden, die sich in einem örtlich vom Ort des Lesegeräts 10 getrennten Kassenbereich des Geschäfts 28 befinden. Jedes Kassenterminal 20-24 ist mit Lesemitteln ausgestattet, die es gestatten, Daten von den Zahlungskarten der Kunden zu lesen. Diese Lesemittel der Kassenterminals 20-24 stellen zweite Lesemittel im Sinne der Erfindung dar.

Zum Bezahlen wird von einem der Kassenterminals 20-24 erneut die Karte des Kunden gelesen. Jedes Kassenterminal ist dazu programmiert und ausgestaltet, in Antwort auf das Auslesen der Karte eine Nachricht an den Zahlungsfreigabeserver 18 zu senden, um die dort gespeicherte Autorisierungsantwortnachricht abzurufen. Die Kassenterminals 20-24 implementieren somit jeweils eine zweite Prozessmaschine im Sinne der Erfindung. Ist eine positive Autorisierungsantwortnachricht beim Zahlungsfreigabeserver 18 eingegangen ist, führt das betreffende Kassenterminal den Zahlungsvorgang zu Ende. Ist keine Autorisierungsantwortnachricht oder eine negative Autorisierungsantwortnachricht beim Zahlungsfreigabeserver 18 eingegangen, bricht das Kassenterminal den Zahlungsvorgang ab, wobei es auf einem nicht näher dargestellten optischen Anzeigefeld oder einem Monitor eine entsprechende Meldung ausgeben kann.

Das Abrufen der Autorisierungsantwortnachricht vom Zahlungsfreigabeserver 18 kann zuverlässig in wesentlich kürzerer Zeit als eine Online-Autorisierung über das Internet oder ein öffentliches Fernsprechnetz geschehen.

Das Lesegerät 10 kann in das lokale Netzwerk eingebunden sein, durch das der Zahlungsfreigabeserver 18 und die Kassenterminals 20-24 verbunden sind. Dies ist in der Zeichnung gestrichelt angedeutet. In diesem Fall kann der Zahlungsfreigabeserver 18 die Autorisierungsanforderungsnachricht absenden, wozu er zuvor vom Lesegerät 10 die gelesenen Kartendaten erhält. Dies hat den Vorteil, dass dieselbe Kommunikationsverbindung sowohl zur Übermittlung der Autorisierungsanforderungsnachricht als auch zur Übermittlung der Autorisierungsantwortnachricht zwischen Host 14 und Zahlungsfreigabeserver 18 genutzt werden kann. Ungeachtet dessen, auf welchem Weg die Autorisierungsanforderungsnachricht zum Host 14 übermittelt wird (über den Zahlungsfreigabeserver 18 oder direkt vom Lesegerät 10), ermöglicht eine Kommunikationsverbindung zwischen dem Lesegerät 10 und dem Zahlungsfreigabeserver 18, dass Letzterer Informationen über jede Karte erhält, deren Daten vom Lesegerät 10 gelesen werden. Dies ermöglicht eine eindeutige Zuordnung einer erhaltenen Autorisierungsantwortnachricht zu einer Karte.

Es ist vorstellbar, dass der Zahlungsfreigabeserver 18, nachdem eine Autorisierungsantwortnachricht einmal von einem Kassenterminal abgefragt wurde, diese Autorisierungsantwortnachricht löscht oder als ungültig oder abgelaufen kennzeichnet. In diesem Fall muss jedes Mal eine neue Autorisierung eingeholt werden, wenn ein Kunde in dem Geschäft einkaufen möchte. Es ist allerdings ebenso vorstellbar, dass eine einmal erteilte Autorisierung für mehr als eine Abfrage gültig ist. In diesem Fall kann ein Kunde mehrmals hintereinander in dem Geschäft einkaufen, ohne jedes Mal seine Karte von dem Lesegerät 10 lesen und sie autorisieren lassen zu müssen. Beispielsweise kann die Autorisierungsantwortnachricht unbegrenzt gültig sein oder nur für eine vorbestimmte Zeitdauer oder/und für eine vorbestimmte Anzahl von Abfragen.

Zweckmäßigerweise erfolgt die Datenkommunikation zwischen dem Lesegerät 10, dem Host 14 und dem Zahlungsfreigabeserver 18 verschlüsselt, um die Sicherheit der Datenübertragung zu erhöhen. Auch die Speicherung der Autorisierungsantwortnachricht kann in verschlüsselter Form erfolgen.

Die Abfrage einer Autorisierungsantwortnachricht durch ein Kassenterminal kann beispielsweise derart erfolgen, dass von dem Kassenterminal in Antwort auf das Lesen der in einer Zahlungskarte gespeicherten Daten eine Transaktionsanforderungsnachricht an den Zahlungsfreigabeserver 18 gesendet wird, in der die Kontodaten der Karte oder eine andere die Karte identifizierende Nummer enthalten sind. Der Zahlungsfreigabeserver 18, der beispielsweise von einem Personal-Computer (PC) gebildet sein kann, durchsucht in Antwort auf den Empfang der Transaktionsanforderungsnachricht eine Datenbank oder eine andere Form einer Datenspeicheranordnung daraufhin, ob in dieser für die betreffende Karte Informationen über eine Autorisierungsantwort des Autorisierungssystems enthalten sind. Er sendet dann an das betreffende Kassenterminal eine entsprechende Nachricht zurück, in der Informationen über die Antwort des Autorisierungssystems oder ein Hinweis enthalten sind, dass keine Antwortnachricht vom Autorisierungssystem erhalten wurde.

Die Autorisierungsantwortnachricht des Autorisierungssystems kann Informationen über einen autorisierten pauschalen oder maximalen Transaktionsbetrag und/oder eine Zeit- oder/und Datumsangabe enthalten, die angibt, bis wann die Autorisierung gültig ist. Alternativ oder zusätzlich kann die Autorisierungsantwortnachricht des Autorisierungssystems Informationen über einen Status des Karteninhabers enthalten. Der Status kann beispielsweise eine Bonität des Karteninhabers bezeichnen oder Angaben zum Umsatz enthalten, den der Karteninhaber bisher bei dem betreffenden Händler gemacht hat. Der pauschale oder maximale Transaktionsbetrag kann beispielsweise ein Kreditlimit für den Kunden sein.

Mit der Transaktionsanforderungsnachricht ruft ein Kassenterminal auch die obigen beispielhaften Informationen vom Zahlungsfreigabeserver 18 ab, so dass es z.B. prüfen kann, ob der von einem Kunden zu zahlende Betrag unterhalb des autorisierten Transaktionsbetrags liegt. Stellt das Kassenterminal beispielsweise fest, dass der Zahlungsbetrag über dem autorisierten Transaktionsbetrag liegt oder der Status des Kunden nicht ausreichend gut ist, kann es dazu eingerichtet sein, eine Online-Kommunikationsverbindung zu dem Host 14 oder zu einem Host einer anderen geeigneten Autorisierungsstelle aufzubauen, um die Zahlungstransaktion auf gewöhnlichem Weg abzuwickeln.

## Patentansprüche

1. Anordnung zur Durchführung elektronischer Transaktionen, umfassend
- erste Lesemittel (10) zum Lesen einer oder mehrerer Kenninformationen von einem Kenninformationsträgerobjekt,
- eine auf die ersten Lesemittel ansprechende erste Prozessmaschine, welche dazu eingerichtet ist, in Antwort auf das Lesen mindestens einer Kenninformation seitens der ersten Lesemittel die Absendung einer elektronischen Autorisierungsanforderung an ein entferntes Transaktionsautorisierungssystem zu bewirken,
- Speichermittel (18) zum Speichern einer von dem Transaktionsautorisierungssystem in Antwort auf die Autorisierungsanforderung zurückgesendeten elektronischen Autorisierungsantwort,
- von den ersten Lesemitteln gesonderte zweite Lesemittel (20-24) zum Lesen von Kenndaten von einem Transaktionsberechtigungsmittel sowie
- eine auf die zweiten Lesemittel ansprechende zweite Prozessmaschine, welche dazu eingerichtet ist, in Antwort auf das Lesen von Kenndaten seitens der zweiten Lesemittel eine Abfrage einer in den Speichermitteln gespeicherten Autorisierungsantwort zu bewirken.

2. Anordnung nach Anspruch 1,
**dadurch gekennzeichnet, dass** die ersten Lesemittel und die zweiten Lesemittel von gesonderten, räumlich getrennt aufgestellten Lesegeräten gebildet sind.

3. Anordnung nach einem der vorhergehenden Ansprüche,
**dadurch gekennzeichnet, dass** die Speichermittel einem Server zugeordnet sind, welcher über ein lokales Netzwerk mit einem oder mehreren Terminalgeräten gekoppelt ist, von denen zumindest ein Teil jeweils eine zweite Prozessmaschine bildet.

4. Verfahren zur Durchführung elektronischer Kartenzahlungstransaktionen, umfassend die Schritte:
- Durchführen eines ersten Lesevorgangs, bei dem eine oder mehrere Kenninformationen von einem Kenninformationsträgerobjekt gelesen werden,
- Absenden einer elektronischen Autorisierungsanforderung an ein entferntes Autorisierungssystem in Antwort auf den ersten Lesevorgang,
- Speichern einer von dem Autorisierungssystem in Antwort auf die Autorisierungsanforderung zurückgesendeten elektronischen Autorisierungsantwort,
- Durchführen eines zweiten Lesevorgangs, bei dem Kenndaten von einem Transaktionsberechtigungsmittel gelesen werden, sowie
- in Antwort auf den zweiten Lesevorgang Bewirken einer Abfrage einer in den Speichermitteln gespeicherten Autorisierungsantwort.

5. Informationsspeichermedium mit darauf oder darin gespeicherten Programmcodemitteln, wobei die Programmcodemittel bei ihrer Ausführung durch eine prozessorbasierte Rechneranordnung die Durchführung des Verfahrens nach Anspruch 4 bewirken.

6. Elektrisches oder elektromagnetisches Signal, welches Programmcodemittel repräsentiert, die bei ihrer Ausführung durch eine prozessorbasierte Rechneranordnung die Durchführung des Verfahrens nach Anspruch 4 bewirken.

7. Transaktionsautorisierungssystem zur Kommunikation mit einer Anordnung nach einem der Ansprüche 1 bis 3, wobei das Transaktionsautorisierungssystem dazu eingerichtet ist, in eine an die Anordnung gerichtete Autorisierungsantwort Informationen über einen autorisierten Transaktionsbetrag einzufügen.
